Europäisches Patentamt

(19) European Patent Office

Office européen des brevets

(11) Publication number: **0 216 968**
**B1**

(12) EUROPEAN PATENT SPECIFICATION

(45) Date of publication of the patent specification:
21.02.90

(21) Application number: 85306557.1

(22) Date of filing: 16.09.85

(51) Int. Cl.⁴: **B23K 20/14**, B23K 20/24,
C04B 37/00

(54) **Pressure welding bonding apparatus.**

(43) Date of publication of application:
08.04.87 Bulletin 87/15

(45) Publication of the grant of the patent:
21.02.90 Bulletin 90/8

(84) Designated Contracting States:
DE GB

(56) References cited:
DE-A- 1 938 948
DE-A- 2 731 986
US-A- 3 257 539
US-A- 3 770 015

(73) Proprietor: **LIFE TECHNOLOGY RESEARCH
FOUNDATION, 3-12 Nihonbashihoncho 3-chome,
Chuo-ku Tokyo(JP)**
Proprietor: **Funakubo, Hiroyasu,
17-4 Nishiogikita 2-chome, Suginami-ku Tokyo(JP)**
Proprietor: **SUMITOMO ELECTRIC INDUSTRIES
LIMITED, No. 15, Kitahama 5-chome Higashi-ku,
Osaka-shi Osaka 541(JP)**

(72) Inventor: **Sekiguchi, Yukio, 1626 Oaza Nishimotojuku,
Higashimatsuyama-shi Saitama-ken(JP)**
Inventor: **Funakubo, Hiroyasu,
17-4 Nishiogikita 2-chome, Suginami-Ku Tokyo(JP)**
Inventor: **Sakanoue, Hitoyuki, c/o Itami Works
Sumitomo Electric Industries, Ltd.,
1-1 Koyakita 1-chome Itami-shi Hyogo(JP)**
Inventor: **Komura, Osamu, c/o Itami Works Sumitomo
Electric Industries, Ltd., 1-1 Koyakita 1-chome Itami-shi
Hyogo(JP)**

(74) Representative: **Warren, Keith Stanley et al, BARON &
WARREN 18 South End Kensington, London
W8 5BU(GB)**

## Description

The present invention relates to the bonding of metals or ceramics among themselves or ceramics to metals and the like, and in particular to a bonding apparatus suitable for the bonding of parts of precision machines.

It has been known that the pressure welding of for example metals among themselves is possible by approaching surfaces to be pressure welded to the distance from each other, at which an inter-atomic gravity force can act.

However, since usually a surface coat such as oxidized coat and nitrified coat exists on a metal surface, it is difficult to pressure weld metals among themselves.

Thus, a method, in which surfaces to be pressure welded are held at high temperatures and the diffusion bonding of materials having a surface coat without containing strong chemical bonds therein is carried out by utilizing the diffusion phenomenon of said surfaces to be pressure welded has been proposed for the general pressure welding method. This method shows a defect in that since the materials to be pressure welded are heated to temperatures near the recrystallization temperatures thereof, metallographical change and thermal strain are produced in the portion bonded and as a result, it is unsuitable for the bonding of parts of precision machines requiring high accuracy.

On the other hand, a method has been proposed in which the surface coat layer is removed by the friction of surfaces to be pressure welded or by brushing the surfaces to be pressure welded with a metal brush in place of a heating treatment of the surfaces and the pressure welding at high temperatures is speedily carried out before the surface coat has again formed.

However, also this method has shown a defect in that since much strain and heat are induced on the surface to be pressure welded, the dimensional change of the portion pressure welded in inevitable.

As described above, the pressure welding is remarkably dependent upon the surface state of metals, so that is is almost impossible in the even that the surface coat layer exists. Accordingly, the pressure welding is possible if a clean surface, on which the surface coat layer does not exist, can be obtained. It is, however, remarkably difficult to remove a surface coat without giving any strain to the surface, and it is difficult to remove the surface coat layer to make very remarkably small surface strain.

One of the present inventors found from his various investigations that metals can be readily bonded among themselves without showing any metallographical change or thermal strain of the material pressure welded, or any dimensional change of the portion pressure welded, and without requiring any special means such as heating treatment, by pressure welding them under superhigh vacuum of $10^{-9}$ mmHg ($1,3 \cdot 10^{-7}$ Pa) or more, after removing a metal surface coat by spattering with inert gas ions (Japanese Patent Application No. 53-32416).

However, since a bonding chamber must be returned to an almost atmospheric pressure condition when the substances to the bonded are put in or removed from the bonding chamber, it takes considerable time to return the inside of the bonding chamber to $10^{-9}$ mmHg ($1,3.10^{-7}$ Pa) or more when the workpieces are to be bonded. Accordingly, an improvement of productivity cannot be expected.

It is an object of the present invention to eliminate the above described defects and to provide an apparatus for bonding metals or ceramics among themselves or ceramics to metals and the like more effectively within a superhigh vacuum bonding chamber.

According to the invention a bonding apparatus comprises holding means for a workpiece to be bonded, a pressing means for pressure welding workpieces to be bonded to each other, a superhigh vacuum bonding chamber capable of maintaining a vacuum of $10^{-9}$ mmHg ($1,3.10^{-7}$Pa) or more provided with said holding means and said pressing means, characterised by a superhigh vacuum bonding preparatory chamber capable of maintaining a vacuum of $10^{-8}$ mmHg ($1,3.10^{-6}$Pa) or more connected with said superhigh vacuum bonding chamber through a gate valve and a conveying means for a workpiece to be bonded for conveying the workpieces to be bonded between said superhigh vacuum bonding preparatory chamber and said superhigh vacuum bonding chamber.

The invention will now be described, by way of example with reference to the accompanying partly diagrammatic drawings, in which:

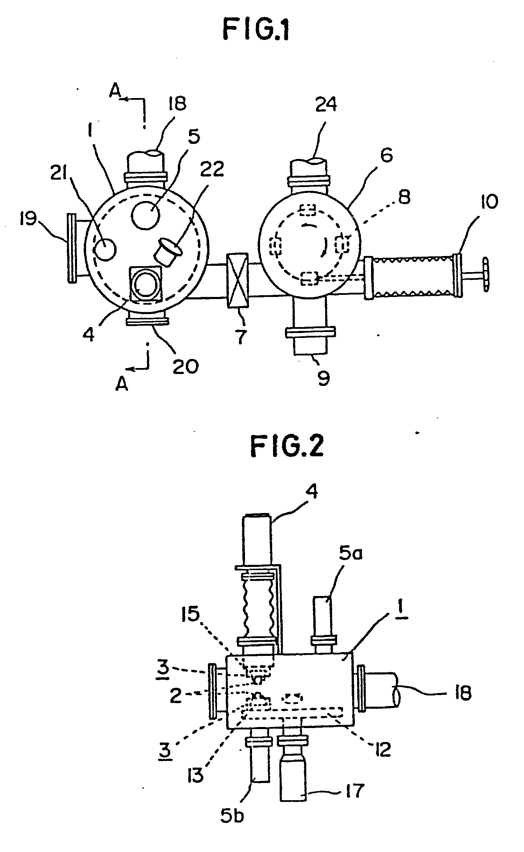

Figure 1 is a plan view of an embodiment of the invention;

Figure 2 is a side view of the apparatus of Figure 1 as viewed from the direction A–A thereof;

Figure 3 is a diagram showing a superhigh vacuum evacuating apparatus used in an embodiment of the present invention; and

Figure 4 is a fragmented perspective view of the principal parts explaining the operation of an embodiment of the present invention.

The present embodiment is mainly composed of the following four portions:

The first portion is a superhigh vacuum bonding chamber (hereinafter referred to simply as a bonding chamber) 1. The bonding chamber 1 is held under superhigh vacuum of $10^{-9}$ mmHg ($1,3.10^{-7}$Pa) or more and provided with a holding means 3 for fixedly holding two workpieces 2 to be bonded, a pressing means 4 for generating a minute pressure, a differential pressure type spatter-etching means 5 capable of spatter-etching surfaces to be bonded with inert gas with holding the vacuum of $10^{-9}$ mmHg ($1,3.10^{-7}$Pa) in order to make the surfaces to be bonded clean surfaces, and substantially ideal ones, prior to the bonding operation.

The second portion is a superhigh vacuum preparatory chamber (hereinafter referred to simply as a preparatory chamber) 6. The preparatory chamber 6 is held under high vacuum of $10^{-8}$ mmHg

(1,3.10$^{-6}$Pa) or more and cut off from the bonding chamber 1 by a gate valve 7. The preparatory chamber 6 communicates with an atmosphere when the workpiece 2 to be bonded is put in or removed but can be held under superhigh vacuum after the workpiece 2 to be bonded has been mounted on a plurality of holders 8. In addition, the preparatory chamber 6 is provided with a spatter-vapour coating apparatus 9 capable of coating a thin film of other substances on the surface of the workpiece 2 to be bonded.

The third portion is a conveying means 10 for conveying the workpiece 2 to be bonded from the preparatory chamber 6 and mounting it on the holding means 3 of the bonding chamber 1.

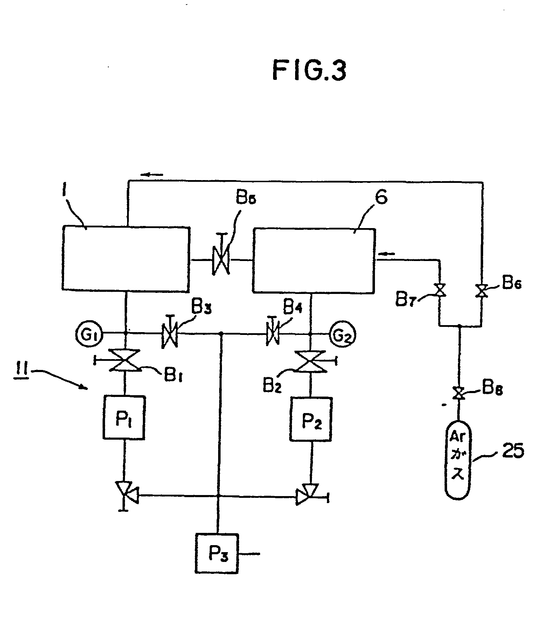

The fourth portion is a superhigh vacuum evacuating apparatus 11 for producing a superhigh vacuum atmosphere within the preparatory chamber 6 and the bonding chamber 1, as shown in Figure 3.

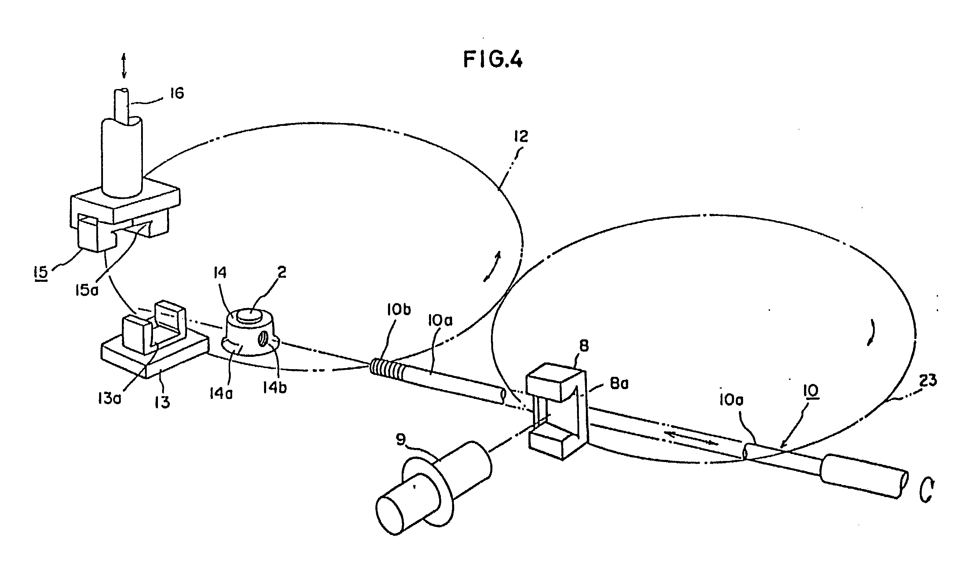

These portions will now be described in more detail. The bonding chamber 1 is generally cylindrical in shape and is provided with a rotary table 12 therein which is controlled so as to be rotatable through suitable angles by a rotary apparatus 17 arranged outside the bonding chamber 1, if need arises. This rotary table 12 is provided with a support 13 for a workpiece to be bonded, the support having an upwardly facing channel-shaped section fixedly mounted thereon as shown in Figure 4. The holding means 3 of the workpiece 2 to be bonded is constructed to hold the workpiece 2 within the bonding chamber 1 by engaging a collar member 14a of a workpiece holder 14 with a groove 13a in support 13. In addition, the bonding chamber 1 is provided in the upper portion thereof with a second support 15 for a workpiece to be bonded, the support comprising a part of the holding means 3 facing the support 13. The support 15 has an inverted channel shape section, which is opposed to that of the lower support 13, and is provided with a groove 15a so as to hold a holder 14 of a workpiece to be bonded in the reverse direction. This support 15 is connected with the pressing means 4, and is movable up and down, and is provided with a closing apparatus 16 for opening and closing the arms of the channel section support 15.

Also, the bonding chamber 1 is provided with the differential pressure type etching means 5 for etching the surface of the workpiece 2 to be bonded, if need arises. Of said differential pressure type etching means 5, an upper spatter-etching apparatus 5a is provided in the upper portion of the bonding chamber 1 at a side opposite to said support 15 while a lower spatter-etching apparatus 5b is provided in the lower portion of the bonding chamber 1 facing the second support 15. In addition, the bonding chamber 1 is provided with an exhaust port 18 connected with said superhigh vacuum evacuating apparatus 11, operation-monitoring ports 19, 20, an instrument port 21, a surface analysis port 22 and the like.

The cylindrical preparatory chamber 6 is provided with a rotary table 23, which is similar to the rotary table 12 provided in the bonding chamber 1, four holders 8 being fixedly mounted on the rotary table 23 at regular intervals of 90°. These holders 8 have a channel-shaped section, which is generally the same as that of the support 13, as shown in Figure 4. The holders 8 are fixedly mounted so that the open side of the channel-shape is directed sidewards, and the workpiece 2 to be bonded is held by engaging the collar member 14a of the holder 14 with a groove 8a of the holder 8. The preparatory chamber 6 is provided with the spatter-vapour coating apparatus 9 on the side thereof facing to the holder 8, as the table 23 is turned, whereby a thin film of other substances can be coated on the surface of the workpiece 2 to be bonded which is mounted on the holder 8.

The conveying means 10 is provided with a movable shaft 10a which is rotatable and movable in an axial direction, said movable shaft 10a passing through the side wall of the preparatory chamber 6 and extendable as far as the support 13 in the bonding chamber 1 through said holder 8 and said gate valve 7. This movable shaft 10a is provided with a screw member 10b at the forward end thereof, the workpiece 2 to be bonded being conveyed between the preparatory chamber 6 and the bonding chamber 1 by screwing this screw member 10b in a complimentary screw member 14b of the holder 14. Furthermore, an exhaust port 24 is connected with the superhigh vacuum evacuating apparatus 11.

The superhigh vacuum evacuating apparatus 11, as shown in Figure 3, comprises superhigh vacuum pumps $P_1$, $P_2$ capable of obtaining a vacuum of about $10^{-2}$ to $10^{-10}$ mmHg, (1,3 to 1,3.10$^{-8}$Pa), a high vacuum pump P capable of obtaining a vacuum of about $10^{-4}$ mmHg (1,3.10$^{-2}$Pa), vacuum gauges $G_1$, $G_2$, valves $B_1$, $B_2$, $B_3$, $B_4$, $B_5$, $B_6$, $B_7$, $B_8$ arranged between the pumps $P_1$, $P_2$, $P_3$, the bonding chamber 1, the preparatory chamber 6 and an argon gas bomb 25, the inside of the bonding chamber 1 and the preparatory chamber 6 being adjusted to the desired vacuum and simultaneously the bonding chamber 1 and the preparatory chamber 6 being fed with argon gas used for ion-etching or ion-spatter vapour coating by appropriate opening and closing the various valves.

The operation of apparatus according to the present embodiment will now be described. At first, a superhigh vacuum atmosphere is produced in the bonding chamber 1 and the preparatory chamber 6. Then the preparatory chamber 6 is opened to atmospheric pressure and a plurality of holders 14, on which the workpiece 2 to be bonded is mounted, are mounted on respective holders 8. After a plurality of workpieces 2 to be bonded are fixedly mounted on the holder 8, the desired superhigh vacuum is again produced in the preparatory chamber 6.

The surface of the workpiece 2 to be bonded put in the superhigh vacuum preparatory chamber 6 can be subjected to the spatter-vapour coating if need arises. In this case, an inert gas such as argon gas is introduced into the preparatory chamber 6 under the vacuum of about $10^{-5}$ mmHg (1,3.10$^{-3}$Pa) and a substance for the desired thin film can be coated on the surface to be spatter-bonded as a spatter-vapour coated film by use of this inert gas. After the spatter-vapour coated film is coated, a high vacuum of $10^{-8}$ mmHg ($1,3.10^{-6}$Pa) is again produced within the preparatory chamber 6.

Upon completion of the operation in the preparatory chamber 6, the screw member 10b is screwed in the screw member 14b of a holder 14 by rotating the movable shaft 10a and the holder 14 is removed from the holder 8 by axially moving the movable shaft 10a. Then the holder 14 is fixedly engaged with the support 13 in the bonding chamber 1 by rotating the rotary table 23 in the preparatory chamber 6 by 45°, rotating the movable shaft 10a by 90°, and simultaneously opening the gate valve 7 to pass the holder 14 through the gate valve 7 and engage the holder 14 in the support 13. After the holder 14 is fixed, the movable shaft 10a is rotated in the reverse direction to remove from the holder 14 and return to the original position in the preparatory chamber 6. Next, the rotary table 23 is further rotated by 45° to screw the pointed end of the movable shaft 10a in another holder 14, the movable shaft 10a being axially moved to remove the holder 14 from the holder 8, and the movable shaft 10a being rotated by 90°. At this juncture, in the bonding chamber 1, the rotary table 12 is under the condition that it is rotated by 180° and the support 15 is under the condition that it is lowered in to a fixed position aligned in the path of the shaft 10a. Subsequently, the movable shaft 10a is axially moved to fixedly engage the holder 14 with the support 15, the movable shaft 10a being rotated to remove from the holder 14, the movable shaft 10a being returned to the original position in the preparatory chamber 6, and simultaneously the gate valve 7 being closed. Under this condition, one of the workpieces 2 to be bonded fixedly held in the bonding chamber 1 is mounted on the pointed end portion of the pressing means 4 and the other one is mounted on the rotary table 12. Accordingly, the surfaces of the workpieces 2 to be bonded are fixed at the positions facing to the upper and lower differential pressure type spatter-etching apparatus 5a, 5b respectively, so that the surfaces of the workpieces 2 to be bonded are subjected to the spatter-etching until the clean surface, which is substantially an ideal one, is obtained. Such a spatter-etching apparatus 5a, 5b on the market can carry out the spatter-etching by use of an inert gas under a superhigh vacuum of $10^{-9}$ mmHg ($1,3.10^{-7}$Pa) and can spatter-etch an area of a certain extent or more by the surface-scanning.

The workpieces 2 to be bonded, to which the substantially ideal clean surfaces were given, are positioned face to face with each other by rotating the rotary table 12 by 180°. Under this condition, minute pressure is added to both surfaces to be bonded by means of the pressing means 4 to carry out the bonding operation. After the completion of the bonding operation, the gate valve 7 between the bonding chamber 1 and the preparatory chamber 6 is opened and the movable shaft 10a inserted and screwed in the holder 14 whilst removing the pressure from the pressing means 4. Then both arms of the support 15 are opened by means of the closing apparatus 16 to loosen the engagement of the holder 14 with the support 15, the movable shaft 10a being returned into the preparatory chamber 6, the holder 14 being engaged with the holder 8 in the preparatory chamber 6, and simultaneously the gate valve 7 being closed. Thus, both of two bonded workpieces are brought into the preparatory chamber 6 in bonded condition and then can be taken out of it by returning the pressure inside the preparatory chamber 6 to an atmospheric pressure.

Thus the procedure from the installation of the workpiece to be bonded in the bonding chamber to its removal from the bonding chamber is over. A large number of bonded products can be obtained by repeating the above described procedure. Although the preparatory chamber 6 disclosed is provided with four holders 8 therein, so that two bonding operations can be carried out without returning the pressure inside the preparatory chamber 6 to an atmospheric pressure, it goes without saying that a larger number of bonding operations can be continuously carried out by increasing the number of the holder 8 in the preparatory chamber 6.

As described above, according to the present invention, a bonding chamber can be always held under superhigh vacuum and the inside of the bonding chamber can be always kept clean, so that not only the inside of the bonding chamber can be free from stains in the open air but also the time required for producing a superhigh vacuum atmosphere can be shortened thereby effectively carrying out a superhigh vacuum bonding process.

## Claims

1. A bonding apparatus comprising a holding means (3) for a workpiece to be bonded, a pressing means (4) for pressure welding workpieces (2) to be bonded to each other, a superhigh vacuum bonding chamber (1) capable of maintaining a vacuum of $10^{-9}$ mmHg ($1,3.10^{-7}$Pa) or more provided with said holding means (3) and said pressing means (4), characterised by a superhigh vacuum bonding preparatory chamber (6) capable of maintaining a vacuum of $10^{-8}$ mmHg ($1,3.10^{-6}$Pa) or more connected with said superhigh vacuum bonding chamber (1) through a gate valve (7) and a conveying means (10) for a workpiece to be bonded for conveying the workpieces (2) to be bonded between said superhigh vacuum bonding preparatory chamber (6) and said superhigh vacuum bonding chamber (1).

2. Apparatus as claimed in claim 1, characterised in that said holding means (3) comprises a first support (14) for releasably supporting a holder (14) for a workpiece (2) to be bonded, said first support being mounted on a rotatable table (12), and a second support (15) for releasably supporting a holder (14) for a workpiece (2) to be bonded, said second support (14) being reciprocably supported for movement towards and away from the table (12).

3. Apparatus as claimed in claim 1 or claim 2, characterised in that the preparatory chamber is provided with a rotary preparatory table (23) having a plurality of supports (8) for releasably supporting holders (14) for workpieces (2) to be bonded, the preparatory table (23) being arranged to position successive supports (8) in register with the conveyor (10).

4. Apparatus as claimed in claim 2 or 3, characterised in that the conveyor comprises a rod (10) having a threaded end (10a) adapted to engage a threaded bore in a holder (14), the rod being axially traversable between the bonding chamber (1) and preparatory chamber (6), and rotatable.

5. Apparatus as claimed in claim 4, characterised in that the supports (13, 15, 8) in the bonding and preparatory chambers (1, 6) are of channel form having internal grooves (13a, 15a, 8a) at opposite sides for engaging flanges on a workpiece holder (14), the second support (15) of the bonding chamber (1) being operable for release of a holder (14) by movement apart of the sides of the channel shape.

## Patentansprüche

1. Verbindeapparat, enthaltend eine Halteeinrichtung (3) für ein zu verbindendes Werkstück, eine Preßeinrichtung (4) zum Preßschweißen von miteinander zu verbindenden Werkstücken, eine ein superhohes Vakuum enthaltende Bindekammer (1), die zum Halten eines Vakuums von $10^{-9}$ mmHg ($1,3.10^{-7}$Pa) oder mehr fähig ist, das in der Halteeinrichtung (3) und in der Preßeinrichtung (4) vorgesehen ist, gekennzeichnet durch eine ein superhohes Vakuum enthaltende Vorbereitungsbindekammer (6), die zum Halten eines Vakuum von $10^{-8}$mmHg ($1,3.10^{-6}$Pa) oder mehr fähig ist und mit der genannten Bindekammer (1) für superhohes Vakuum über ein Torventil (7) verbunden ist, und durch eine Fördereinrichtung (10) für ein zu verbindendes Werkstück zum Fördern der zu verbindenden Werkstücke (2) zwischen der ein superhohes Vakuum enthaltenden Vorbereitungsbindekammer (6) und der ein superhohes Vakuum enthaltenden Bindekammer (1).

2. Verbindeapparat nach Anspruch 1, dadurch gekennzeichnet, daß die Halteeinrichtung (3) einen ersten Support (13) zum lösbaren Festhalten eines Halters (14) für ein zu verbindendes Werkstück (2), wobei der erste Support auf einem Drehtisch (12) montiert ist, und einen zweiten Support (15) zum lösbaren Festhalten eines Halters (14) für ein zu verbindendes Werkstück (2) umfaßt, wobei der zweite Support (15) zur Bewegung zum Drehtisch (12) und davon weggerichtet hin- und hergehend ausgebildet ist.

3. Verbindeapparat nach Anspruch 1 oder 2, dadurch gekennzeichnet, daß die Vorbereitungsbindekammer mit einem Vorbereitungsdrehtisch (23) versehen ist, der eine Vielzahl von Supports (8) zum lösbaren Festhalten von Haltern (14) für zu verbindende Werkstücke (2) aufweist, wobei der Vorbereitungsdrehtisch (23) zum registerhaltigen Positionieren aufeinanderfolgender Supports (8) mit der Fördereinrichtung (10) angeordnet ist.

4. Verbindeapparat nach Anspruch 2 oder 3, dadurch gekennzeichnet, daß die Fördereinrichtung eine Stange (10) mit einem Gewindeende (10a) umfaßt, welch letzteres in eine Gewindebohrung in einem Halter (14) eingreift, und daß die Stange zwischen der Bindekammer (1) und der Vorbereitungsbindekammer (6) axial hin- und herbewegbar und drehbar ist.

5. Verbindeapparat nach Anspruch 4, dadurch gekennzeichnet, daß die Supports (13, 15, 8) in der Binde- und in der Vorbereitungsbindekammer (1; 6) eine Kanalform haben, die an gegenüberliegenden Seiten innere Nuten (13a, 15a, 8a) zum Eingriff mit Flanschen am Werkstückhalter (14) aufweist, und daß der zweite Support (15) der Bindekammer (1) zum Lösen eines Halters (14) durch gesonderte Bewegung zu den Seiten der Kanalform betätigbar ist.

## Revendications

1. Appareil d'assemblage, comprenant un moyen de serrage (3) pour une pièce à assembler, un moyen de compression (4) pour le soudage par compression de pièces (2) à assembler l'une à l'autre, une chambre d'assemblage (1) sous vide extrême, capable de maintenir un vide de $10^{-9}$ mmHg ($1,3.10^{-7}$ Pa) ou plus, pourvue dudit moyen de serrage (3) et dudit moyen de compression (4), caractérisé par une chambre préparatoire (6) pour assemblage sous vide extrême, capable de maintenir un vide de $10^{-8}$ mmHg ($1,3.10^{-6}$ Pa) ou plus, reliée à ladite chambre (1) d'assemblage sous vide extrême par l'intermédiaire d'une vanne (7), et un moyen de transport (10) destiné à une pièce à assembler, pour transporter les pièces (2) à assembler entre ladite chambre préparatoire (6) pour assemblage sous vide extrême et ladite chambre (1) pour assemblage sous vide extrême.

2. Appareil selon la revendication 1, caractérise en ce que ledit moyen de serrage (3) comprend un premier support (14) destiné à supporter, d'une manière amovible, un dispositif de fixation (14) d'une pièce (2) à assembler, ledit premier support étant monté sur un plateau tournant (12), et un deuxième support (15) pour supporter d'une manière amovible un dispositif de fixation (14) d'une pièce (2) à assembler, ledit deuxième support (14) étant soutenu de façon à pouvoir subir un mouvement alternatif vers le plateau (12) et à partir de ce dernier.

3. Appareil selon la revendication 1 ou la revendication 2, caractérisé en ce que la chambre préparatoire est pourvue d'un plateau tournant préparatoire (23) possédant une pluralité de supports (8) pour supporter d'une manière amovible des dispositifs de fixation (14) de pièces (2) à assembler, le plateau préparatoire (23) étant disposé de façon à positionner des supports successifs (8) en registre avec le dispositif de transport (10).

4. Appareil selon la revendication 2 ou 3, caractérisé en ce que le dispositif de transport comprend une tige (10) ayant une extrémité filetée (10a) adaptée de façon à entrer en prise avec un trou taraudé aménagé dans le dispositif de fixation (14), la tige pouvant passer axialement entre la chambre d'assemblage (1) et la chambre préparatoire (6), et pouvant tourner.

5. Appareil selon la revendication 4, caractérisé en ce que les supports (13, 15, 8) se trouvant dans les chambres d'assemblage et préparatoire (1, 6) ont une forme en U, présentant des rainures internes (13a, 15a, 8a) sur leurs faces opposées, pour entrer en prise avec des brides se trouvant sur le dispositif (14) de fixation de la pièce, le deuxième support (15) de la chambre d'assemblage (1) pouvant être exploité de façon à libérer un dispositif de fixation (14) par un déplacement, l'un par rapport à l'autre, des côtés de la forme en U.

# FIG.1

# FIG.2

# FIG.3

FIG.4